# FASCICULE DE BREVET EUROPEEN

(11) **EP 1 558 052 B1**
(45) Date de publication et mention de la délivrance du brevet: **24.10.2007**
(21) Numéro de dépôt: 05290058.6
(22) Date de dépôt: 10.01.2005
(51) Int. Cl.: H04Q 7/38, H04Q 7/22

(54) **Procédé de localisation assistée de terminaux mobiles de communication d'un réseau cellulaire, par utilisation d'un canal de transport USSD**
Verfahren zur unterstützten Lokalisierung von mobilen Kommunikationsendgeräten eines zellulären Kommunikationsnetzes durch einen USSD Transportkanal
Method of assisted localization for mobile communication terminals of a cellular network by means of a USSD transport channel

(30) Priorité: 26.01.2004 FR 0450134
(43) Date de publication de la demande: 27.07.2005
(73) Titulaire: Alcatel Lucent, 75008 Paris (FR)
(72) Inventeur: Tang-Taye, Jacky, 78490 Montfort l'Amaury (FR)
(74) Mandataire: Hedarchet, Stéphane

(56) Documents cités:
- EP-A- 1 298 448
- US-A1- 2002 077 116
- US-A1- 2002 171 581
- US-B1- 6 204 808
- US-B1- 6 463 288

## Description

L'invention concerne le domaine des réseaux cellulaires de communications, et plus précisément la localisation par satellites de terminaux mobiles de communication rattachés à de tels réseaux.

Certains terminaux mobiles de communication sont équipés d'un dispositif de positionnement par satellites qui leur permet de déterminer leur position grâce à des données de navigation fournies par une installation de positionnement par satellites, de type RNSS (pour « Radio Navigation Satellite Service »), comme par exemple le réseau GPS, ou le réseau GLONASS, ou encore le futur réseau GALILEO.

On entend ici par « terminal mobile » tout terminal de communication capable d'échanger des données avec un réseau cellulaire et équipé d'un dispositif de positionnement par satellites pouvant être couplé à une installation de positionnement par satellites. Par conséquent il pourra s'agir, par exemple, d'un téléphone mobile, ou d'un assistant personnel numérique (ou PDA) ou d'un ordinateur portable équipé d'une interface radio de communication.

Comme le sait l'homme de l'art, pour qu'un dispositif de positionnement puisse déterminer la position du terminal dans lequel il est implanté, il est nécessaire qu'il réussisse tout d'abord à se caler sur au moins trois satellites de positionnement, dits « en vue », et plus préférentiellement quatre.

Ce calage pouvant prendre un temps relativement long, il a été proposé de coupler les installations de positionnement par satellites à des serveurs chargés de fournir sur requête aux dispositifs de positionnement par satellites (qui sont alors dits assistés) des données d'assistance représentatives des identifiants des satellites en vue dans leurs cellules respectives. Plus précisément, on fournit au serveur de données d'assistance d'une requête de localisation, lequel est représentatif de sa position estimée, afin qu'il détermine les satellites en vue dans cette cellule et qu'il transmette leurs identifiants respectifs au terminal mobile concerné, éventuellement via un équipement de gestion de localisation de son réseau cellulaire.

Une fois qu'un dispositif de positionnement par satellites assisté est en possession des identifiants des satellites en vue de son terminal mobile, l'opération de calage est alors grandement facilitée.

Selon le type du réseau cellulaire et/ou la configuration du terminal mobile, les données d'assistance peuvent être transmises au terminal concerné par le réseau cellulaire soit en mode circuit (ou « Circuit-Switched »), soit dans des messages courts (ou SMS), soit encore dans des paquets GPRS (pour « General Packet Radio System »), comme décrit dans US 2002/077116.

La transmission en mode circuit est une technique de transmission de données qui est lente et ne permet pas un transfert sensiblement simultané de données de voix et de données d'assistance.

La transmission de SMS nécessitant un stockage dans une file d'attente, elle est relativement lente et sujette à des délais d'attente non prédictibles.

Enfin, la transmission GPRS ne permet pas un transfert sensiblement simultané de données de voix et de données d'assistance. En outre, elle ne peut s'envisager que dans les réseaux dits 2,5 G, tels que les réseaux GSM/GPRS.

Aucune technique connue n'étant entièrement satisfaisante, l'invention a donc pour but d'améliorer la situation.

Elle propose à cet effet un procédé de localisation de terminaux mobiles de communication, rattachés à un réseau cellulaire de communications et comprenant chacun un dispositif de positionnement par satellites assisté, pouvant être couplé à une installation de positionnement par satellites, elle-même couplée à un serveur de données d'assistance.

Ce procédé se caractérise par le fait qu'il consiste, en cas de requête de localisation de l'un des terminaux mobiles :
- à établir un canal de transport de données, de type USSD, entre le dispositif de positionnement par satellites assisté de ce terminal et un équipement de gestion de localisation appartenant au réseau cellulaire et couplé au serveur, puis
- à transmettre au terminal, via le canal de transport USSD, des données d'assistance représentatives des identifiants d'au moins trois satellites (et de préférence quatre) en vue dans la cellule dans laquelle il est situé, de sorte que son dispositif de positionnement par satellites assisté puisse se caler sur ces satellites dans le but d'estimer au minimum chaque distance séparant son terminal des satellites en vue.

On peut déterminer dans le dispositif de positionnement par satellites assisté la position de son terminal, et si la requête de localisation émane du réseau on transmet à l'équipement de gestion de localisation des données représentatives de cette position. En variante, on peut ne déterminer au niveau du dispositif de positionnement par satellites assisté que les distances qui séparent son terminal des satellites identifiés, et transmettre à l'équipement de gestion de localisation des données qui ne sont que représentatives des distances terminal/satellite déterminées, la détermination de la position du terminal s'effectuant alors au niveau de l'équipement de gestion de localisation, éventuellement en coopération avec le serveur de données d'assistance.

Lorsque l'équipement de gestion de localisation est différencié du serveur de données d'assistance, l'équipement peut, lorsqu'il reçoit une requête de localisation, transmettre au serveur des données représentatives de l'identifiant de la cellule dans laquelle est situé le terminal concerné, afin qu'il puisse déterminer à partir de celles-ci la position de la cellule et les données d'assistance correspondantes, puis qu'il lui communique ces données d'assistance afin qu'il les transmette au terminal concerné via le canal de transport USSD. En variante, l'équipement de gestion de localisation peut également constituer le serveur de données d'assistance. Dans ce cas, on détermine dans l'équipement les données d'assistance à partir de l'identifiant de la cellule dans laquelle est situé le terminal concerné, puis on les transmet au terminal concerné via le canal de transport USSD.

La requête de localisation peut être générée soit par le terminal, soit par un équipement du réseau, éventuellement l'équipement de gestion de localisation. Dans le premier cas, les données représentatives de l'identifiant de la cellule sont préférentiellement contenues dans la requête de localisation, qui est transmise à l'équipement de gestion de localisation, tandis que dans le deuxième cas elles sont déterminées au sein du réseau cellulaire à réception (ou en cas de génération locale) de la requête de localisation.

Par ailleurs, les transmissions de données dans le canal de transport USSD s'effectuent par exemple sous la forme de messages dédiés de bout-en-bout et selon un protocole dit « de plan d'utilisateur » (ou « User Plane Protocol »).

L'invention propose également un terminal mobile de communication, pour un réseau cellulaire de communications, comprenant un dispositif de positionnement par satellites assisté pouvant être couplé à une installation de positionnement par satellites, elle-même couplée à un serveur de données d'assistance.

Ce terminal mobile se caractérise par le fait qu'il comprend des moyens de gestion de données de type USSD, capables d'établir des canaux de transport de données, de type USSD, et des moyens de traitement, chargés de coupler sur requête les moyens de gestion de données de type USSD au dispositif de positionnement par satellites assisté afin qu'ils établissent un canal de transport USSD entre ce dispositif et un équipement de gestion de localisation appartenant au réseau cellulaire et couplé au serveur. Ce canal USSD permet alors de transmettre au dispositif des données d'assistance représentatives des identifiants d'au moins trois satellites en vue dans la cellule dans laquelle le terminal est situé, pour qu'il puisse se caler sur ces satellites puis estimer au minimum les distances qui les séparent de son terminal.

Le dispositif de positionnement par satellites assisté peut être agencé de manière à déterminer la position de son terminal. Si la requête de localisation émane du réseau, le terminal transmet alors à l'équipement de gestion de localisation des données représentatives de sa position, via le canal de transport USSD. En variante, si le dispositif de positionnement par satellites assisté est agencé de manière à ne déterminer que les distances qui séparent son terminal des satellites identifiés, le terminal transmet à l'équipement de gestion de localisation, via le canal de transport USSD, des données représentatives de ces distances.

Par ailleurs, les moyens de traitement peuvent être agencés de manière à fournir aux moyens de gestion des données représentatives de l'identifiant de la cellule dans laquelle est situé leur terminal, de sorte qu'ils les transmettent à l'équipement via le canal de transport USSD en vue de la détermination des données d'assistance.

L'invention est particulièrement bien adaptée, bien que de façon non exclusive, aux réseaux cellulaires de communications dits 2G, tels que les réseaux GSM.

D'autres caractéristiques et avantages de l'invention apparaîtront à l'examen de la description détaillée ci-après, et des dessins annexés, sur lesquels :
- la figure 1 illustre de façon schématique un exemple de réalisation d'un réseau GSM couplé à un centre de gestion de localisation et à un serveur de données d'assistance d'une installation de positionnement par satellites assisté,
- la figure 2 illustre de façon schématique une variante de réalisation de centre de gestion de localisation intégrant un serveur de données d'assistance d'une installation de positionnement par satellites assisté, et
- la figure 3 illustre de façon schématique et fonctionnelle un exemple de réalisation d'un terminal mobile selon l'invention.

Les dessins annexés pourront non seulement servir à compléter l'invention, mais aussi contribuer à sa définition, le cas échéant.

L'invention a pour objet de faciliter la localisation de terminaux mobiles de communication rattachés à des réseaux cellulaires de communications et couplés à une installation de positionnement par satellites de type assisté.

On entend ici par « installation de positionnement par satellites de type assisté », une installation comprenant un réseau de positionnement par satellites de type RNSS (pour « Radio Navigation Satellite System »), comme par exemple le réseau GPS, ou le réseau GLONASS, ou le futur réseau GALILEO, ou encore la combinaison d'au moins deux des trois réseaux précités, couplé à un serveur de données d'assistance chargé de fournir des données d'assistance facilitant le calcul de la position estimée de terminaux mobiles, ou de paramètres nécessaires à la détermination de cette position, par des dispositifs de positionnement par satellites assisté, implantés dans lesdits terminaux mobiles.

Par ailleurs, on entend ici par « terminal mobile », tout type de terminal mobile capable, d'une part, d'échanger des données avec un réseau cellulaire de communications, et notamment des données d'assistance provenant du serveur de données d'assistance, et d'autre part, de recevoir au moins des signaux contenant des données de navigation du réseau de positionnement par satellites. Il pourra- donc s'agir, par exemple, d'un téléphone mobile, ou d'un assistant personnel numérique (ou PDA) ou d'un ordinateur portable équipé d'une interface radio de communication.

Dans ce qui suit on considère, à titre d'exemple, que l'installation de positionnement par satellites assisté est le réseau A-GPS (ou « Assisted-GPS ») et que les terminaux mobiles sont des téléphones mobiles équipés d'un dispositif de positionnement par satellites assisté.

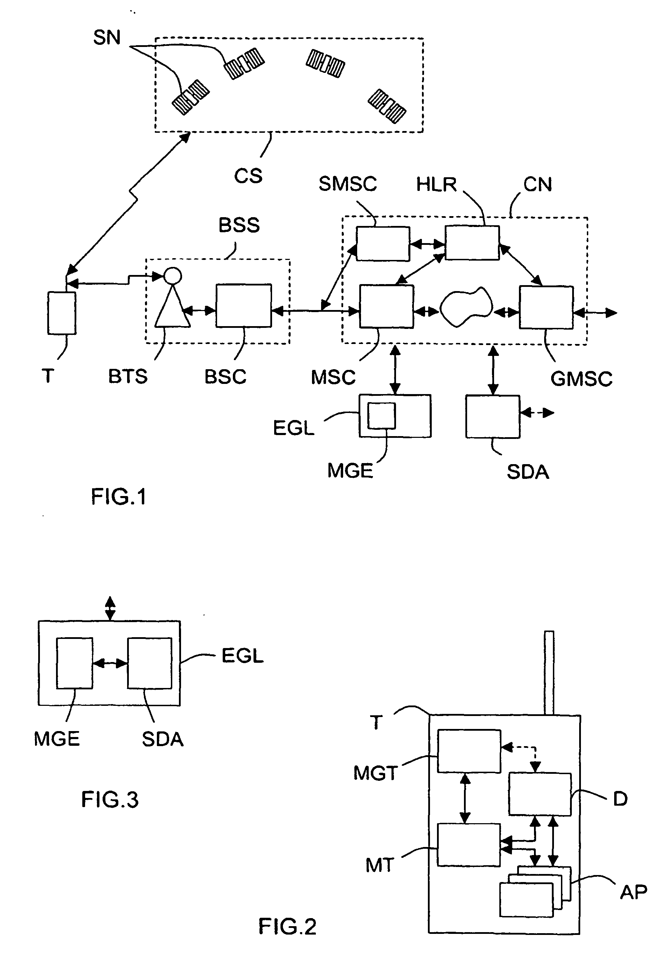

Par ailleurs, et comme illustré sur la figure 1, on considère dans ce qui suit, à titre d'exemple, que le réseau cellulaire de communications est un réseau de type GSM. Bien entendu, tout autre type de réseau cellulaire est concerné par l'invention, et notamment les réseaux de type GSM/GPRS et UMTS (et tous leurs équivalents).

L'installation de positionnement par satellites assisté (réseau de positionnement GPS (référencé CS sur la figure 1) et serveur de données d'assistance A-GPS (SDA)), et son fonctionnement global étant tout à fait classiques, ils ne seront pas décrits plus en détail. Les fonctionnements respectifs du réseau GPS (CS) et du serveur de données d'assistance A-GPS associé (SDA), demeurent donc inchangés par rapport à ceux de l'art antérieur. Il est simplement rappelé que le serveur A-GPS (SDA) est chargé de délivrer, sur requête, des données d'assistance représentatives, notamment, des identifiants des satellites de navigation SN qui sont en vue dans la cellule dans laquelle est situé le terminal mobile T objet de la requête, à partir de la position estimée de cette cellule (fournie par le réseau ou par le terminal mobile T) et des positions en cours des satellites de navigation SN du réseau GPS.

Des informations complémentaires sur le réseau A-GPS peuvent être trouvées dans le site internet du 3GPP et plus précisément dans l'annexe D du document 3GPP « Location Services (LCS); Functional Description Stage 2 » où elles sont référencées 3GPP TS 03.71 V8.2.0.

Par ailleurs, le réseau GSM auquel sont rattachés les téléphones mobiles T est tout à fait classique. Il peut être résumé, comme illustré sur la figure 1, à un réseau d'accès radio, appelé BSS, et couplé par une interface (appelée A) à un coeur de réseau ou CN (pour « Core Network », ou encore NSS), lui-même éventuellement couplé à un ou plusieurs autres réseaux publics et/ou privés.

Le coeur de réseau CN (ou NSS) comporte tout d'abord un centre de commutation mobile MSC (pour « Mobile Switching Centre ») couplé à l'interface A et chargé de réaliser les opérations nécessaires à la gestion des communications en mode circuit avec les terminaux mobiles T rattachés à son réseau. Ce centre de commutation mobile MSC est éventuellement couplé à un ou plusieurs autres réseaux, fixes ou mobiles, par l'intermédiaire d'une passerelle de commutation GMSC (pour « Gateway MSC »). Le coeur de réseau CN comporte également un centre de commutation de messages appelé SMSC (pour « Short Message Switching Centre»), couplé à l'interface A et chargé de réaliser les opérations nécessaires à la gestion des messages, notamment de type SMS, avec les terminaux mobiles T rattachés à son réseau. Le coeur de réseau CN comporte en outre une base de données appelée HLR (pour « Home Location Register »), contenant des données d'information sur les terminaux mobiles T, tant statiques que dynamiques (dernière localisation connue ou position de la dernière cellule d'appartenance). Les MSC, SMSC et GMSC sont tous couplés au HLR afin de pouvoir obtenir les informations sur les terminaux mobiles, nécessaires à leurs traitements respectifs.

Le serveur A-GPS (SDA) est généralement couplé, directement ou indirectement, au coeur de réseau CN.

Le réseau d'accès radio BSS comporte généralement, d'une part, plusieurs noeuds ou contrôleurs de réseau radio, appelés BSCs (pour « Base Station Controllers ») et couplés au coeur de réseau CN, via l'interface A, et d'autre part, plusieurs stations de base d'émission/réception, appelées BTS, associées chacune à une ou plusieurs cellules couvrant chacune une zone radio, et couplées seules ou par groupe d'au moins deux à l'un des BSCs via une interface logique appelée Abis.

On prévoit en outre, dans le cadre de l'invention, un équipement de gestion de localisation EGL, comme par exemple un SMLC (pour « Service Mobile Location Centre »), couplé au coeur de réseau CN (ou faisant éventuellement partie de celui-ci) et au serveur A-GPS (SDA), via le réseau GSM, et dont la fonction sera précisée plus loin.

Comme mentionné ci-avant, l'invention a pour objet de faciliter la localisation de terminaux mobiles T rattachés à un réseau cellulaire et couplés à une installation de positionnement par satellites de type assisté (CS et SDA).

Elle propose à cet effet d'établir, chaque fois que se présente une requête de localisation de l'un des téléphones mobiles T rattachés au réseau GSM, un canal de transport de données, de type USSD (pour « Unstructured Supplementary Service Data »), entre le dispositif de positionnement assisté D, de ce téléphone mobile T, et l'équipement de gestion de localisation EGL. Une fois que le canal USSD a été établi, on peut alors transmettre au téléphone mobile T, via celui-ci, des données d'assistance représentatives des identifiants d'au moins trois satellites de navigation SN (et de préférence quatre) en vue dans la cellule dans laquelle il est situé. Le dispositif D du téléphone mobile T peut alors se caler, de façon beaucoup plus rapide que dans le cas non assisté, sur les satellites identifiés afin d'estimer au minimum les distances qui les séparent de son téléphone mobile T, en vue de la détermination de sa position.

Afin que l'invention puisse être mise en oeuvre, il est indispensable, comme illustré sur les figures 1 et 2, que l'équipement de gestion de localisation EGL et le téléphone mobile T soient chacun équipé d'un module de gestion de données de type USSD (MGE, MGT).

Des informations détaillées sur le formalisme des canaux USSD et les moyens nécessaires à leur mise en oeuvre peuvent être trouvées sur le site internet du 3GPP, et plus précisément dans les spécifications 3GPP TS 22.090 (« Unstructured Supplementary Service Data (USSD) » - Stage 1), 3GPP TS 23.090 version 4.0.0 Release 4 (« Unstructured Supplementary Service Data (USSD) » - Stage 2), et 3GPP TS 24.090 version 4.0.0 Release 4 (« Unstructured Supplementary Service Data (USSD) » - Stage 3).

Le module de gestion MGE de l'équipement EGL est plus précisément chargé, lorsqu'il reçoit du réseau GSM une requête de localisation d'un téléphone mobile T (ou bien lorsqu'il génère lui-même cette requête), d'initier auprès du coeur de réseau CN l'établissement d'un canal de transport USSD entre ledit équipement EGL et le dispositif D du téléphone mobile T concerné. De son côté, le téléphone mobile T comprend un module de traitement MT chargé, notamment, lorsque le réseau GSM lui signale qu'un canal de transport USSD doit être établi entre l'équipement EGL et le dispositif D de son téléphone mobile T, de mettre en relation le module de gestion MGT et le dispositif D afin que ledit module de gestion MGT établisse une « liaison » avec ce dispositif D, nécessaire à l'établissement final du canal de transport USSD entre ledit dispositif D et l'équipement EGL. Les différentes phases d'initiation et d'établissement du canal de transport USSD s'effectuent de façon classique par échange de messages de signalisation.

Lorsque la requête de localisation émane du téléphone mobile T, par exemple de l'une de ses applications AP, son module de traitement MT met en relation son module de gestion MGT et son dispositif D afin que ledit module de gestion MGT établisse une « liaison » avec ce dispositif D, nécessaire à l'établissement du canal de transport USSD entre ledit dispositif D et l'équipement EGL. Puis, le module de gestion MGT initie auprès du coeur de réseau CN l'établissement d'un canal de transport USSD entre le dispositif D et l'équipement EGL. Le coeur de réseau CN signale ensuite au module de gestion MGE de l'équipement EGL qu'un canal de transport USSD doit être établi entre ledit équipement EGL et le dispositif D du téléphone T concerné. Les différentes phases d'initiation et d'établissement du canal de transport USSD s'effectuent de façon classique par échange de messages de signalisation.

Il est important de noter que le serveur A-GPS SDA peut être intégré dans l'équipement de gestion de localisation EGL, comme illustré sur la figure 3. Dans cette configuration, le module de gestion MGE peut établir une « liaison » avec le serveur A-GPS, si bien que l'on peut considérer que l'on établit un canal de transport USSD entre un dispositif D et le serveur A-GPS SDA.

Une fois que le canal de transport USSD a été établi entre un dispositif D et l'équipement EGL (ou le serveur A-GPS SDA), il est alors possible de transmettre audit dispositif D, via ledit canal de transport USSD, les données représentatives des identifiants des satellites SN qui sont en vue dans la cellule dans laquelle est situé son téléphone mobile T.

Cette transmission requiert une opération préalable. Il est en effet nécessaire de communiquer au serveur A-GPS SDA l'identifiant de la cellule dans laquelle est situé le téléphone mobile T. Cet identifiant peut être fourni soit par le téléphone mobile T, soit par le réseau.

Dans le premier cas, le téléphone mobile T détermine en interne l'identifiant de sa cellule, et l'intègre dans la requête de localisation qu'il génère à destination de son module de traitement MT. Lorsque le module de traitement MT signale au module de gestion MGT qu'un canal de transport USSD doit être établi, il lui communique l'identifiant de la cellule, afin qu'il le transmette, via ledit canal, à l'équipement EGL, pour qu'il le communique à son tour au serveur A-GPS SDA.

Cette transmission des données représentatives de l'identifiant de la cellule s'effectue dans le canal de transport USSD sous la forme de messages dédiés de bout-en-bout et selon un protocole propriétaire dit « de plan d'utilisateur » (ou « User Plane Protocol »). Ces messages dédiés USSD, qui sont transmis selon un protocole de plan d'utilisateur, présentent l'avantage d'être indépendants d'une éventuelle communication de type audio établie entre le téléphone mobile T concerné et un autre terminal de communication. Ils constituent une chaîne d'octets, généralement d'un maximum de 160 octets, permettant le transfert de caractères, généralement 182 au maximum (comme décrit dans la spécification 3GPP TS 23.038 version 4.4.0 Release 4, « Alphabets and language-specific information »).

A réception de l'identifiant de la cellule, le serveur A-GPS SDA détermine la localisation correspondante dans une base de données identifiant/position qui est régulièrement mise à jour par le réseau cellulaire.

Dans le second cas, lorsque l'équipement EGL reçoit (ou génère lui-même) une requête de localisation désignant un téléphone mobile T, il détermine au sein du réseau GSM, et plus précisément auprès du HLR, l'identifiant de la cellule dans laquelle il est situé, puis il transmet cet identifiant au serveur A-GPS SDA qui détermine ensuite la localisation correspondante dans la base de données identifiant/position.

Dans l'un ou l'autre cas, le serveur A-GPS SDA détermine de façon classique les identifiants des satellites SN en vue dans la cellule dont il vient de déterminer la position à partir de l'identifiant reçu. Il utilise pour ce faire les positions en cours des satellites SN de la constellation CS du réseau GPS, qu'il récupère à l'aide d'un ou des récepteur(s) de référence fournissant des informations en temps réel sur les satellites.

Une fois les identifiants déterminés, le serveur A-GPS SDA génère des données qui les représentent et les transmet à l'équipement EGL, qui les transmet à son tour au dispositif D, via le canal de transport USSD. Cette transmission, tout comme toute autre transmission survenant entre le dispositif D et l'équipement EGL, s'effectue également sous la forme d'un message dédié USSD, selon le protocole de plan d'utilisateur.

Lorsque le dispositif D reçoit les identifiants des satellites SN en vue dans la cellule où est situé son téléphone mobile T, il n'a plus qu'à se caler classiquement dessus de manière à estimer les distances qui le sépare de quatre d'entre eux (et au minimum trois).

Généralement, lorsque le téléphone mobile T comporte une application interne AP nécessitant sa position à des instants choisis, son dispositif de positionnement assisté D est agencé de manière à déterminer lui-même chaque position à partir des distances téléphone/satellite qu'il a estimées. Dans ce cas, une fois que le dispositif D a estimé les distances téléphone/satellite, il détermine la position du téléphone T et la communique à l'application interne qui l'a requise.

Lorsque la requête de localisation provient du réseau GSM, deux situations peuvent être envisagées : soit le dispositif D est agencé pour déterminer la position de son téléphone T (mode dit « MS-based »), soit le dispositif D n'est agencé que pour estimer des distances téléphone/satellite (mode dit « MS-assisted »).

Dans le mode MS-based, une fois que le dispositif D a estimé les distances téléphone/satellite, il détermine la position du téléphone T et la transmet à l'équipement EGL, via le canal de transport USSD et sous la forme d'un message dédié USSD, selon le protocole de plan d'utilisateur. L'équipement EGL utilise alors cette position en interne ou la communique à l'application (ou l'équipement) du réseau GSM qui l'a requise.

Dans le mode MS-assisted, une fois que le dispositif D a estimé les distances téléphone/satellite, il les transmet à l'équipement EGL, via le canal de transport USSD et sous la forme d'un message dédié USSD, selon le protocole de plan d'utilisateur. L'équipement EGL détermine alors en interne la position du téléphone mobile T concerné à partir des distances reçues, ou bien il communique les distances reçues au serveur A-GPS SDA afin qu'il détermine ladite position, puis lui communique. L'équipement EGL utilise ensuite la position en interne ou la communique à l'application (ou l'équipement) du réseau GSM qui l'a requise.

Une fois qu'une position a été déterminée et éventuellement transmise au réseau GSM, le canal de transport USSD est supprimé.

Des données d'assistance autres que les identifiants des satellites en vue peuvent être transmises par le serveur A-GPS SDA à un dispositif D, soit spontanément, soit à la requête du dispositif D, dès lors qu'elles peuvent être utiles à la détermination des distances téléphone/satellite et/ou à la position du téléphone logeant le dispositif D.

Le module de traitement MT, les modules de gestion USSD MGT et MGE et le dispositif de positionnement par satellites assisté D, peuvent être réalisés sous la forme de circuits électroniques, de modules logiciels (ou informatiques), ou d'une combinaison de circuits et de logiciels.

L'invention ne se limite pas aux modes de réalisation de terminal mobile de communication et de procédé de localisation décrits ci-avant, seulement à titre d'exemple, mais elle englobe toutes les variantes que pourra envisager l'homme de l'art dans le cadre des revendications ci-après.

## Revendications

1. Procédé de localisation de terminaux mobiles de communication T rattachés à un réseau cellulaire de communications et comprenant chacun un dispositif de positionnement par satellites assisté D, propre à être couplé à une installation de positionnement par satellites CS couplée à un serveur de données d'assistance SDA, **caractérisé en ce qu'**il consiste, en cas de requête de localisation de l'un desdits terminaux mobiles T, à établir un canal de transport de données, de type USSD, entre le dispositif D dudit terminal et un équipement de gestion de localisation EGL appartenant audit réseau cellulaire et couplé audit serveur SDA, puis à transmettre audit terminal T, via ledit canal de transport USSD, des données d'assistance représentatives d'identifiants d'au moins trois satellites SN en vue dans la cellule dans laquelle il est situé, de sorte que son dispositif D se cale sur lesdits satellites SN afin d'estimer au moins chaque distance qui les sépare de son terminal T, en vue de la détermination de la position de ce dernier.

2. Procédé selon la revendication 1, **caractérisé en ce que** l'on détermine au niveau du dispositif D la position du terminal T dans lequel il est implanté.

3. Procédé selon la revendication 2, **caractérisé en ce qu'**en présence d'une requête de localisation issue du réseau, on transmet audit équipement de gestion de localisation EGL, via ledit canal de transport USSD, des données représentatives de ladite position déterminée.

4. Procédé selon la revendication 1, **caractérisé en ce que** l'on détermine au niveau du dispositif D les distances qui séparent le terminal T dans lequel il est implanté de chacun des satellites SN identifiés, de manière à transmettre audit équipement de gestion de localisation EGL, via ledit canal de transport USSD, des données représentatives desdites distances déterminées, puis on détermine au niveau dudit équipement de gestion de localisation EGL la position dudit terminal T.

5. Procédé selon l'une des revendications 1 à 4, **caractérisé en ce que** ledit équipement de gestion de localisation EGL étant raccordé audit serveur de données d'assistance SDA, à réception d'une requête de localisation ledit équipement EGL transmet audit serveur SDA des données représentatives de l'identifiant de la cellule dans laquelle est situé le terminal T concerné, de sorte qu'il détermine à partir de cet identifiant lesdites données d'assistance puis les communique audit équipement EGL afin qu'il les transmette audit terminal T concerné via ledit canal de transport USSD.

6. Procédé selon l'une des revendications 1 à 4, **caractérisé en ce que** ledit équipement de gestion de localisation EGL constituant ledit serveur de données d'assistance SDA, on détermine dans ledit équipement EGL lesdites données d'assistance à partir de données représentatives de l'identifiant de la cellule dans laquelle est situé le terminal T concerné, afin de les transmettre audit terminal T concerné via ledit canal de transport USSD.

7. Procédé selon l'une des revendications 5 et 6, **caractérisé en ce que** ladite requête de localisation est générée par ledit terminal T et comporte lesdites données représentatives de l'identifiant de la cellule dans laquelle il est situé.

8. Procédé selon l'une des revendications 5 et 6, **caractérisé en ce que** lesdites données représentatives de l'identifiant de la cellule sont fournies par le réseau cellulaire.

9. Procédé selon l'une des revendications 1 à 8, **caractérisé en ce que** lesdites transmissions de données dans le canal de transport USSD s'effectuent sous la forme de messages dédiés de bout-en-bout et selon un protocole dit de plan d'utilisateur.

10. Terminal mobile de communication T, pour un réseau cellulaire de communications, comprenant un dispositif de positionnement par satellites assisté D propre à être couplé à une installation de positionnement par satellites CS couplée à un serveur de données d'assistance SDA, **caractérisé en ce qu'**il comprend des moyens de gestion de données de type USSD MGT propres à établir des canaux de transport de données, de type USSD, et des moyens de traitement MT agencés pour coupler sur requête lesdits moyens de gestion de données de type USSD MGT audit dispositif D afin qu'ils établissent un canal de transport USSD entre ce dispositif et un équipement de gestion de localisation EGL appartenant audit réseau cellulaire et couplé audit serveur SDA, de manière à permettre la transmission audit dispositif, via ledit canal de transport USSD, de données d'assistance représentatives d'identifiants d'au moins trois satellites SN en vue dans la cellule dans laquelle ledit terminal T est situé, afin qu'il se cale sur lesdits satellites SN pour estimer au moins les distances qui les séparent de son terminal T.

11. Terminal selon la revendication 10, **caractérisé en ce que** ledit dispositif D est agencé pour déterminer la position dudit terminal T.

12. Terminal selon la revendication 11, **caractérisé en ce qu'**en présence d'une requête de localisation issue du réseau cellulaire, il est agencé pour transmettre audit équipement de gestion de localisation EGL, via ledit canal de transport USSD, des données représentatives de ladite position déterminée.

13. Terminal selon la revendication 10, **caractérisé en ce qu'**il est agencé pour transmettre audit équipement de gestion de localisation EGL, via ledit canal de transport USSD, des données représentatives desdites distances séparant son terminal T des satellites SN identifiés.

14. Terminal selon l'une des revendications 10 à 13, **caractérisé en ce que** lesdits moyens de traitement MT sont agencés pour fournir auxdits moyens de gestion MGT des données représentatives de l'identifiant de la cellule dans laquelle est situé ledit terminal T, de sorte qu'ils les transmettent audit équipement EGL, via ledit canal de transport USSD, en vue de la détermination desdites données d'assistance.

15. Terminal selon l'une des revendications 10 à 14, **caractérisé en ce que** lesdits moyens de gestion MGT sont agencés pour gérer la transmission des données dans le canal de transport USSD sous forme de messages dédiés de bout-en-bout et selon un protocole dit de plan d'utilisateur.

## Claims

1. A method of locating mobile communications terminals T each comprising an assisted satellite positioning device D, adapted to be connected to a satellite positioning installation CS connected to an assistance data server SDA, which method is **characterized in that**, in the event of a location request from a mobile terminal T, it sets up a USSD type transport data channel between the device D of said terminal and a location management equipment EGL belonging to the cellular network of said terminal connected to said server SDA and then sends assistance data to said terminal T via said USSD transport channel, the assistance data being representative of identifiers of at least three satellites SN visible in the cell in which it is situated with the result that its device D locks onto said satellites SN in order to estimate at least the distance between its terminal T and each of the satellites, aiming at determining the position of the terminal.

2. A method according to claim 1, **characterized in that** the device D determines the position of the terminal T in which it is installed.

3. A method according to claim 2, **characterized in that**, in the event of a location request from the network, said location management equipment EGL is sent data representative of said position that has been determined via said USSD transport channel.

4. A method according to claim 1, **characterized in that** the device D determines the distance between the terminal T in which it is installed and each of the identified satellites SN in order to send said location management equipment EGL via said USSD transport channel data representative of said distances, after which said location management equipment EGL determines the position of said terminal T.

5. A method according any one of claims 1 to 4, **characterized in that** said location management equipment EGL is connected to said assistance data server SDA and, on reception of a location request, said equipment EGL sends said server SDA data representative of the identifier of the cell in which the terminal T concerned is situated, with the result that it determines said assistance data from that identifier and then that data to said equipment EGL in order for it to send the data to said terminal T concerned via said USSD transport channel.

6. A method, according te any one of claims 1 to 4, **characterized in that** said location management equipment EGL constitutes said assistance data server SDA and said equipment EGL determines said assistance data from data representative of the identifier of the cell in which the terminal T concerned is situated in order to send the data to said terminal T concerned via said USSD transport channel.

7. A method according to claim 5 or claim 6, **characterized in that** said location request is generated by said terminal T and includes said date representative of the identifier of the cell in which it is situated.

8. A method according to claim 5 or claim 6, **characterized in that** said data representative of the cell is supplied by the cellular network.

9. A method according to any one of claims 1 to 8, **characterized in that** data is transmitted on the USSD transport channel in the form of dedicated end-to-end messages and in accordance with plane protocol.

10. A mobile communications terminal T for a cellular communications network, comprising an assisted satellite positioning device D adapted to be connected to a satellite positioning installation CS connected to an assistance data server SDA, the terminal being **characterized in that** it comprises USSD type data management means MGT adapted to establish USSD type transport channels and processing means MT adapted to connect said USSD type data management means MGT to said device D on request in order for a USSD transport channel to be set up between said device and a location management equipment EGL belonging to said cellular network and connected to said server SDA in such a manner as to enable assistance data to be sent to said device, via said USSD transport channel, the assistance data being representative of identifiers of at least three satellites SN visible in the cell in which said terminal T is situated in order for it to lock onto said satellites SN to determine at least the distances between them and its terminal T.

11. A terminal according to claim 10, **characterized in that** said device D is adapted to determine the position of said terminal T.

12. A terminal according to claim 11, **characterized in that** in the event of a location request from the cellular network said location management equipment EGL is sent data representative of said position that has been determined via said USSD transport channel.

13. A terminal according to claim 10, **characterized in that** it is adapted to send said location management equipment EGL via said USSD transport channel data representative of said distances between its terminal T and the identified satellites SN.

14. A terminal according to any one of claims 10 to 13, **characterized in that** said processing means MT are adapted to supply said management means MGT with data representative of the identifier of the cell in which said terminal T is situated for it to send the data to said equipment EGL via the USSD transport channel for the purpose of determining said assistance data.

15. A terminal according to any one of claims 10 to 14, **characterized in that** said management means MGT are adapted to manage the sending of data on the USSD transport channel in the form of dedicated end-to-end messages and in accordance with a user plane protocol.

## Patentansprüche

1. Verfahren zur Lokalisierung von mobilen Kommunikationsendgeräten T, die zu einem zellulären Kommunikationsnetz gehören und jeweils eine unterstützte Vorrichtung zur Positionierung per Satellit D enthalten, die an eine Anlage zur Positionierung per Satellit CS gekoppelt werden kann, die an einen Unterstützungsdatenserver SDA gekoppelt ist, **dadurch gekennzeichnet, dass** es darin besteht, im Falle der Lokalisierungsanforderung eines dieser mobilen Endgeräte T einen USSD-Transportkanal zwischen dieser Vorrichtung D dieses Endgeräts und einer Ausrüstung zur Lokalisierungsverwaltung EGL, die zu diesem zellulären Netz gehört und an diesen Server SDA gekoppelt ist, aufzubauen, dann via diesen USSD-Transportkanal an dieses Endgerät T Unterstützungsdaten zu übermitteln, die für Kennungen von mindestens drei Satelliten SN in Sicht in der Zelle charakteristisch sind, in welcher es sich befindet, damit seine Vorrichtung D sich auf diese Satelliten SN einstellt, um zumindest jeweils die Entfernung abzuschätzen, die sie von ihrem Endgerät T trennt, im Hinblick auf die Bestimmung der Positionen des letzteren.

2. Verfahren gemäß Anspruch 1, **dadurch gekennzeichnet, dass** man auf der Ebene der Vorrichtung D die Position des Endgeräts T bestimmt, in dem sie eingebaut ist.

3. Verfahren gemäß Anspruch 2, **dadurch gekennzeichnet, dass** man beim Vorliegen einer vom Netz stammenden Lokalisierungsanforderung an diese Ausrüstung zur Lokalisierungsverwaltung EGL über diesen USSD- Transpol'tka11al Daten übermittelt, die für diese bestimmte Position charakteristisch sind.

4. Verfahren gemäß Anspruch 1, **dadurch gekennzeichnet, dass** man auf der Ebene der Vorrichtung D die Entfernungen bestimmt, die das Endgerät T, in dem sie eingebaut ist, jeweils von den identifizierten Satelliten SN trennen, so dass über diesen ÜSSD-Transportkanal Daten an diese Ausrüstung zur Lokalisierungsverwaltung EGL übermittelt werden, die für diese ermittelten Entfernungen charakteristisch sind, und man dann auf der Ebene dieser Ausrüstung zur Lokalisienmgsverwaltung EGL die Position dieses Endgeräts T ermittelt.

5. Verfahren gemäß einem der Anspruche 1 bis 4, **dadurch gekennzeichnet, dass** wegen des Anschlusses dieser Ausrüstung zur Lokalisierungsvenvaltung EGL an diesen Untersützungsdatenserver SDA diese Ausrüstung EGL beim Empfangen einer Lokalisienngsanforderung Daten an diesen Server SDA übermittelt, die für die Kennung der Zelle charakteristisch sind, in der sich das betreffende Endgerät T befindet, so dass er ausgehend von dieser Kennung diese Unterstützungsdaten bestimmt und sie dann dieser Ausrüstung EGL mitteilt, damit diese sie via diesen USSD-Transportkanal an das betreffende Endgerät T übermittelt.

6. Verfahren gemäß einem der Ansprüche 1 bis 4, **dadurch gekennzeichnet, dass** da diese Ausrüstung zur Lokalisierungsverwaltung EGL diesen Unterstützungsdatensenser SDA bildet, man in dieser Ausrüstung EGL diese Unterstützungsdaten auf der Grundlage von Daten ermittelt, die für die Kennung der Zelle charakteristisch sind, in der sich das betreffende Endgerät T befindet, um sie an dieses betreffende Endgerät T via diesen USSD-Transportkanal zu übermitteln.

7. Verfahren gemäß einem der Anspruche 5 und 6, **dadurch gekennzeichnet, dass** diese Lokalisierungsanforderung von diesem Endgerät T erstellt wird und diese Daten beinhaltet, die für die Kennung der Zelle charakteristisch sind, in der es sich befindet.

8. Verfahren gemäß einem der Ansprüche 5 und 6, **dadurch gekennzeichnet, dass** diese Daten, die für die Kennung der Zelle charakteristisch sind, vom zellulären Netz bereitgestellt werden.

9. Verfahren gemäß einem der Ansprüche 1 bis 8, **dadurch gekennzeichnet, dass** diese Datenübermittlungen im USSD-Transportkanal in Form von dedizierten durchgehenden Mitteilungen und gemäß einem so genannten Benutzerplan-Protokoll erfolgen.

10. Mobiles Kammunikationsendgerät T für ein zelluläres Kommunikationsnetz, beinhaltend eine unterstützte Vorrichtung zur Positionierung per Satellit D, die an eine Anlage zur Positionierung per Satellit CS gekoppelt werden kann, die an einen Unterstützungsdatenserver SDA gekoppelt ist, **dadurch gekennzeichnet, dass** es Mittel zur Verwaltung von USSD-Daten MGT enthält, die Kanäle für den Transport von Daten des Typs USSD aufbauen können, und Mittel zur Verarbeitung MT, die so aufgebaut sind, dass sie auf Anforderung diese Mittel zur Verwaltung von USSD-Daten MGT mit dieser Vorrichtung D koppeln, damit sie einen USSD-Transportkanal zwischen dieser Vorrichtung und einer Ausrüstung zur Lokalisierungsverwaltung EGL, die zu diesem zellulären Netz gehört und an dieser Server SDA gekoppelt ist, aufbauen, so dass via diesen USSD-Transportkanal die Übermittlung von Unterstützungsdaten möglich ist, die für Kennungen von mindestens drei Satelliten SN in Sicht in der Zelle charakteristisch sind, in welcher dieses Endgerät T sich befindet, damit sie sich auf diese Satelliten SN einstellt, um zumindest die Entfernungen abzuschätzen, die sie von ihrem Endgerät T trennen.

11. Endgerät gemäß Anspruch 10, **dadurch gekennzeichnet, dass** diese Vorrichtung D so aufgebaut ist, dass sie die Position dieses Endgeräts T ermittelt.

12. Endgerät gemäß Anspruch 11, **dadurch gekennzeichnet, dass** es so aufgebaut ist, dass es beim Vorliegen einer Lokalisierungsanforderung, die vom zellulären Netz stammt, via diesen USSD-Transportkanal Daten an diese Ausrüstung zur Lokalisierungsverwaltung EGL übermittelt, die für diese ermittelte Position charakteristisch sind.

13. Endgerät gemäß Anspruch 10, **dadurch gekennzeichnet, dass** es so aufgebaut ist, dass es via diesen USSD-Transportkanal Daten an diese Ausrüstung zur Lokalisierungsverwaltung EGL übermittelt, die für diese Entfernungen charakteristisch sind, welche sein Endgerät T von den identifizierten Satelliten SN trennen.

14. Endgerät gemäß einem der Ansprüche 10 bis 13, **dadurch gekennzeichnet, dass** diese Mittel zur Verarbeitung MT so aufgebaut sind, dass sie diesen Mitteln zur Verwaltung MGT Daten bereitstellen, die für die Kennung der Zelle charakteristisch sind, in welcher dieses Endgerät T sich befindet, so dass sie diese via diesen USSD-Transportkanal an diese Ausrüstung EGL übermitteln, im Hinblick auf die Ermittlung dieser Unterstützungsdaten.

15. Endgerät gemäß eine der Anspruch 10 bis 14, **dadurch gekennzeichnet, dass** diese Mittel zur Verwaltung MGT so aufgebaut sind, dass sie die Übermittlung der Daten im USSD-Transportkanal in Form von dedizierten durchgehenden Mitteilungen und gemäß einem so genannten Benutzerplan-Protokoll verwalten.
